(19)

Europäisches
Patentamt
European
Patent Office
Office européen
des brevets

(11) **EP 4 542 342 A1**

(12) **EUROPEAN PATENT APPLICATION**

(43) Date of publication:
  **23.04.2025 Bulletin 2025/17**

(21) Application number: **23306802.2**

(22) Date of filing: **16.10.2023**

(51) International Patent Classification (IPC):
  **G06F 3/01** (2006.01)    **G06F 1/16** (2006.01)
  **G02B 27/01** (2006.01)

(52) Cooperative Patent Classification (CPC):
  **G06F 3/013; G06F 1/1626; G06F 1/163;
  G06F 1/1686; G06F 1/1694; G06F 3/011;**
  G02B 2027/0178

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **KH MA MD TN**

(71) Applicant: **Essilor International
  94220 Charenton-Le-Pont (FR)**

(72) Inventors:
  • **NG, Jinhhao
    339346 Singapore (SG)**

  • **TRANVOUEZ-BERNARDIN, Delphine
    94000 Créteil (FR)**
  • **LE CAIN, Aurélie
    94000 Créteil (FR)**
  • **SAHLER, Jean
    94000 Créteil (FR)**

(74) Representative: **Korakis-Ménager, Sophie
  Essilor International
  Propriété Intellectuelle
  147, rue de Paris
  94220 Charenton-le-Pont (FR)**

(54) **SYSTEM COMPRISING A HEAD-WORN DEVICE AND A HAND-HELD DEVICE AND CONFIGURED TO DETECT A USE OF THE HAND-HELD DEVICE BY A USER WEARING THE HEAD-WORN DEVICE**

(57)    System and computer-implemented method for detecting a use of a hand-held device by a user wearing a head-worn device, the system comprises a head-worn device and a hand-held device, the system is configured to detect a use of the hand-held device by a user wearing the head-worn device. The system is also configured to determine a relative motion of one among the head-worn device and the hand-held device with respect to another among the head-worn device and the hand-held device and to detect, based on the relative motion, the use of the hand-held device by the user.

EP 4 542 342 A1

## Description

## Technical field

This disclosure relates to systems comprising a head-worn device and a hand-held device and configured to detect a use of the hand-held device by a user wearing the head-worn device. This disclosure also relates to computer-implemented methods configured for the same.

## Background information and prior art

Detecting the use of the hand-held device by the user wearing the head-worn device may be useful to realize a plurality of actions, for example, to adapt values of parameters of functions of the hand-held device and/or the head-worn device.

Some systems of the state of the art may realize this detection based on image sensors. However, these systems have several drawbacks. For example, they have the drawback of having weak performance in low light situations.

The system, according to this disclosure, allows the detection of the use of the hand-held device and avoids the drawbacks previously described.

## Summary

The following presents a simplified summary to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is a system. The system comprises a head-worn device and a hand-held device. The system is configured to detect a use of the hand-held device by a user wearing the head-worn device. The system is also configured to determine a relative motion of one among the head-worn device and the hand-held device with respect to another among the head-worn device and the hand-held device and, to detect, based on the relative motion, the use of the hand-held device by the user.

The system of this disclosure is to allow a quicker determination of the use of the hand-held device by the user. Thanks to this quicker determination values of parameters of a function of the hand-held device or the head-worn device may be adapted quicker and therefore the user could use comfortably the hand-held device quicker.

Another aspect of this disclosure is a computer-implemented method for detecting a use of a hand-held device by a user wearing a head-worn device. The computer-implemented method comprises determining a relative motion of one among the head-worn device and the hand-held device with respect to another among the head-worn device and the hand-held device and detecting, based on the relative motion, the use of the hand-held device by the user.

A computer may include a memory and a processor. Examples of processors include microprocessors, microcontrollers, graphics processing units (GPUs), central processing units (CPUs), application processors, digital signal processors (DSPs), reduced instruction set computing (RISC) processors, systems on a chip (SoC), field-programmable gate arrays (FPGAs), programmable logic devices (PLDs), state machines, gated logic, discrete hardware circuits, and other suitable hardware configured to perform the various functionality described throughout this disclosure. The memory may be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the computer.

Another aspect of this disclosure is a non-transitory program storage device, readable by a computer, tangibly embodying a program of instructions executable by the computer to perform the computer-implemented for detecting the use of a hand-held device by a user wearing a head-worn device. The computer-implemented method comprises determining a relative motion of one among the head-worn device and the hand-held device with respect to another among the head-worn device and the hand-held device and detecting, based on the relative motion, the use of the hand-held device by the user.

## Description of the drawings

For a more complete understanding of the description provided herein and the advantages thereof, reference is now made to the brief descriptions below, taken in connection with the accompanying drawings and detailed description, wherein like reference numerals represent like parts.

Figure 1 represents a system comprising a hand-held device and a head-worn device.
The figure 2 represents an example of characteristic points of a face of the user.
The figure 3 represents an example of a 3D model of the face.
The figure 4 represents 3 coordinate systems.
The figure 5 represents characteristic points of the iris.

The figure 6 represents the distance between the two pupils and the distance between the eyes of the user and the hand-held device.

Figure 7 represents a first example of a method for detecting the use of the hand-held device by the user wearing the head-worn device.

Figure 8 represents a second example of a method for detecting the use of the hand-held device by the user wearing the head-worn device.

Figure 9 represents a second example of a method for detecting the use of the hand-held device by the user wearing the head-worn device.

## Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

### Description of the system comprising a hand-held device and a head-worn device

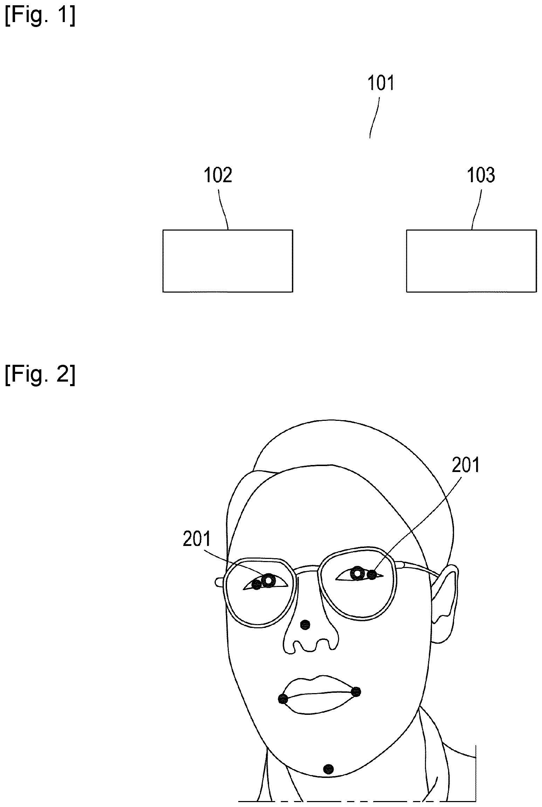

Figure 1 represent the system 101 comprising a hand-held device 102 and a head-worn device 103.

The system 101 may comprise a detection module configured to detect a use of the hand-held device 102 by a user wearing the head-worn device 103.

The detection module may comprise at least one processor and at least one memory. The at least one processor and the at least on memory may be configured to realize the method for detecting a use of the hand-held device 102 by a user wearing the head-worn device 103.

The detection module may be integrated in the hand-held device 102 or the head-worn device 103.

Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field-programmable gate arrays (FPGAs), programmable logic devices (PLDs), state machines, gated logic, discrete hardware circuits, and other suitable hardware configured to perform the various functionality described throughout this disclosure.

The memory may be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the calculation module.

When the detection module is integrated in the hand-held device 102, the detection module may be integrated in a system on chip (SoC) of the hand-held device 102. This system on chip may be also configured to realize other functions of the hand-held device 102.

When the detection module is integrated in the head-worn device 103, the detection module may be integrated in a system on chip (SoC) of the head-worn device 103. This system on chip may be also configured to realize other functions of the head-worn device 103.

The hand-held device 102 may be an electronic device, for example, a device comprising an electronic display. The electronic device may be a smartphone, a computer or a tablet.

The head-worn device 103 may be eyeglasses, for example smart eyeglasses or a clip configured to be attachable to eyeglasses.

The head-worn device 103 may also comprise an optical device. This optical device may be an active optical device.

The active optical device may be an electrochromic optical lens or may be configured to display elements. To display elements, the active optical elements may comprise a Light Optical Element (LOE).

By an active optical device, one means an optical device in which a value of a parameter of a functionality of the optical device can be modified on-demand. The value of the parameter may be modified by applying a signal, for example an electrical signal to terminals of the active optical device. The functionality may be one of the following:

- a transmittance level of the active optical device,
- a tint of the active optical device,
- a reflectance level of the active optical device and
- a parameter of a polarization of the active optical device, for example a polarization angle of the active optical device,
- an optical power of the active optical device,
- elements displayed by the active optical device. The elements may be images, symbols, letters, or texts. In embodiments, the elements to be displayed and the position of these elements may be selected.

The hand-held device 102 may comprise a motion determination module.

The head-worn device 103 may comprise a motion determination module.

The motion determination module of the hand-held device 102 may be an Inertial Measurement Unit (IMU).

**The** motion determination module of the head-worn device 103 may be an Inertial Measurement Unit (IMU).

The hand-held device 102 may comprise an eye tracking module.

The head-worn device 103 may comprise an eye tracking module.

The hand-held device 102 may comprise a distance module.

The head-worn device 103 may comprise a distance module.

The eye tracking module and the distance module of the hand-held device 102 or of the head-worn device 103 may be a TrueDepth sensor.

The distance module may be configured for determining a distance between the hand-held device 102 and the head-worn device 103 or the eye of the user.

The system 101 of this disclosure allows a detection of the use of the hand-held device 102 by the user. Once the use is detected the system 101 may be configured to adapt a value of a parameter of a function of the hand-held device 102 or the head-worn device 103. The aim of this adaptation is to allow a better use of the hand-held device 102.

The adaptation of the values and the quickness of the detection of the use of the hand-held device 102 allows a more comfortable use of the hand-held device 102.

The hand-held device 102 and/or the head-worn device 103 may comprise a camera.

The camera of the hand-held device 102 may be used to obtain images of a face of the user. These images may be used to determine the use of the hand-held device 102, for example by determining a gaze axis of the user.

**The** images of the face of the user may be treated frame by frame independently. The images may be treated in real time. The camera of the hand-held device 102 may be activated in background while the hand-held device 102 is held by the user.

To determine an angle of a head of the user, one may extract location, on the images acquired by the camera, of characteristic points of the face of the user. These characteristic points may be chosen among:

- the left eye corner of the left eye or of the right eye,
- the right eye corner of the left eye or of the right eye,
- the nose tip,
- the left lip corner,
- the right lip corner and
- the chin.

The figure 2 represents example of this characteristic points 201.

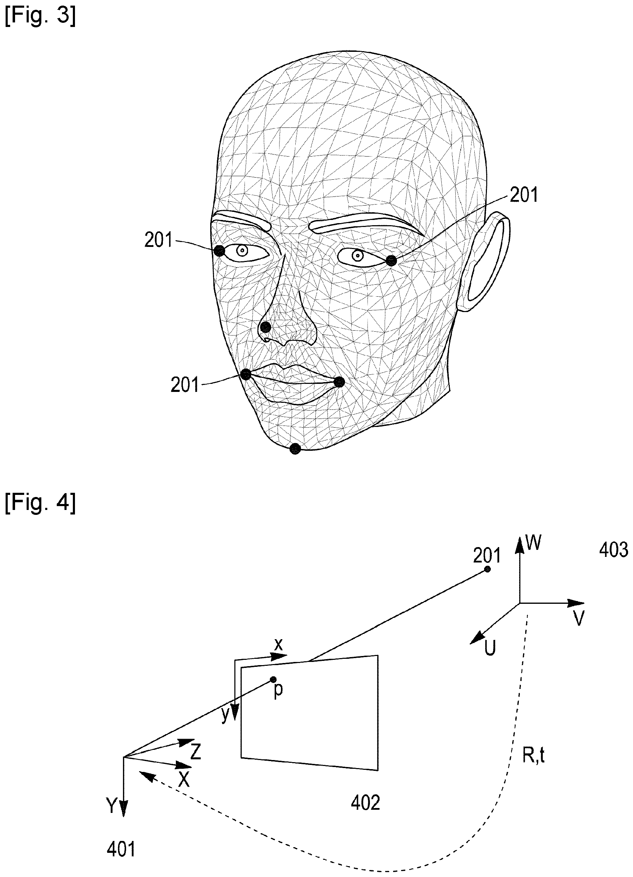

Using the characteristic points 201 of the figure 2 one may determine a 3D model of the face of the user. The figure 3 represents an example of the 3D model of the face with the characteristic points 201 located.

One may acquire values of parameters of the camera parameters. These values may be expressed as the following 3x3 matrix which may be used during a determination of a pose of the head:

$$camera\ matrix = \begin{bmatrix} f_x & 0 & c_x \\ 0 & f_y & c_y \\ 0 & 0 & 1 \end{bmatrix}$$

$f_x$ and $f_y$ are values of the focal length of the camera while $c_x$ and $c_y$ are values of the optical centre of the camera. While the camera parameters may be unique to a specific camera, one may estimate these parameters from the image (the image presented on the image plane). Both $f_x$ and $f_y$ may be directly proportional to the width of the image while the coordinates at mid-width and mid-height of the image can be assumed to be the optical centre of the camera.

After getting the necessary parameters, one may determine the angles of the head. There are three coordinate systems usable to determine these angles. These coordinate systems are represented figure 4. 401 is the world coordinates, with coordinates being U, V and W. 402 is the image plane coordinates, with coordinates being x and y. 403 is the camera coordinates, with coordinates being X, Y et Z. The image plane coordinates 402 may be the screen of the hand-held device 102. The coordinates in world coordinates 401 of the characterising points 201 of the face may be determined based on the coordinates in camera coordinates 403 using a transformation comprising for example a rotation R and a translation t. The characterising points 201 in camera coordinates 403 may be projected in the image plane coordinates 402 using the intrinsic parameters of the camera (focal length, optical centre etc.).

**The** relationship between the image coordinates and the camera coordinates based on intrinsic parameters of the camera may be model using the equation below:

$$\begin{bmatrix} x \\ y \\ z \end{bmatrix} = s \begin{bmatrix} f_x & 0 & c_x \\ 0 & f_y & c_y \\ 0 & 0 & 1 \end{bmatrix} \begin{bmatrix} X \\ Y \\ Z \end{bmatrix}$$

Here, the camera coordinates may be transformed into world coordinates by a translation and rotation transformation (i.e., the head angles and translation)

$$s \begin{bmatrix} X \\ Y \\ Z \end{bmatrix} = \begin{bmatrix} r_{00} & r_{01} & r_{02} & t_x \\ r_{10} & r_{11} & r_{12} & t_y \\ r_{20} & r_{21} & r_{22} & t_z \end{bmatrix} \begin{bmatrix} U \\ V \\ W \\ 1 \end{bmatrix}$$

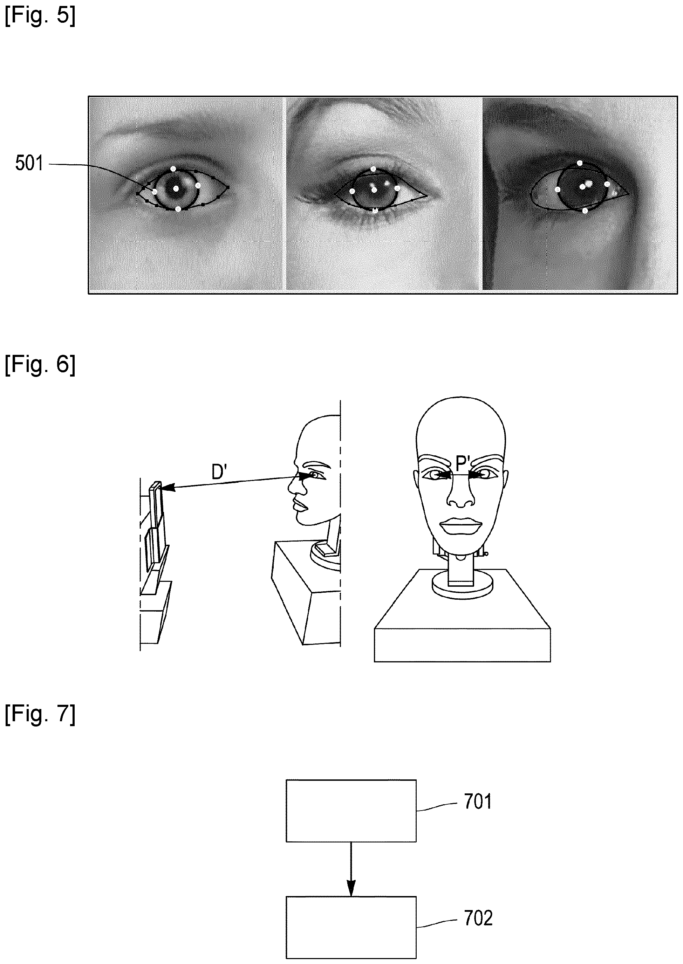

The images obtained from the camera of the hand-held device 102 may also be used to determine a motion of an iris of the user. The skilled person would know how to realise this determination, for example the skilled person would know to use an iris tracking model to obtain landmarks of the iris. The skilled person may use the mediapipe library of the company Google. One may determine 5 characteristic points of the iris (4 on the circumference of the iris and 1 in the centre of the iris). The coordinates of the centre of the iris are extracted to track the motion of the iris from frame to frame. Figure 5 represents characteristic points 501 of the iris.

Using the images obtained from the camera of the hand-held device 102 one may also determine the distance between the hand-held device 102 and the eyes of the user.

This distance may be estimated using scale referencing method. One may require a distance between the two pupils of the user and the corresponding value of number of pixels in the image. Figure 6 represents the distance P' between the two pupils and the distance D' between the eyes of the user and the hand-held device 102. The distance D' may be obtained using the following formula:

$$D' = F * pd/P'$$

Wherein F is a focal length (in pixel), *pd* is the distance between the two pupils (in cm) and P' is the distance between the two pupils in the image (in pixel).

The camera of the head-worn device 103 may be used to obtain images of a field of view of the user. These images may be used to determine the use of the hand-held device 102, for example by determining when the hand-held device 102 is within the field of view of the user.

### Description of the method for detecting the use of the hand-held device by the user wearing the head-worn device

The method for detecting the use of the hand-held device 102 by the user wearing the head-worn device 103 is represented schematically in the figure 7. The method for detecting the use of the hand-held device 102 by the user wearing the head-worn device 103 comprises:

- a step 701 of determining a relative motion of one among the head-worn device 103 and the hand-held device 102 with respect to another among the head-worn device 103 and the hand-held device 102,
- a step 702 of detecting, based on the relative motion, the use of the hand-held device 102 by the user.

By relative motion of a first object with respect to a second object, one means the motion of the first object in a referentiel in which the second object is fixed.

The relative motion may be determined based on an absolute motion of the hand-held device 102 and an absolute motion of the head-worn device 103.

The absolute motion of the hand-held device 102 may be obtained from the motion determination module of the hand-held device 102.

The absolute motion of the head-worn device 103 may be obtained from the motion determination module of the head-worn device 103.

In embodiments, the step 702 of detecting the use of the hand-held device 102 by the user may comprise:

- determining a value of a parameter of the relative motion,
- determining when the user is using the hand-held device by comparing the value with a predetermined threshold.

The parameter of the relative motion may be a speed of the relative motion, for example expressed in °/s. According to tests realized by the applicant, the predetermined threshold may be chosen between 10°/s and 6°/s.

The parameter may be an amplitude of the relative motion or a variation of the relative motion, for example a first-order or second-order derivation of the amplitude of the relative motion.

One may compare the value with the predetermined threshold and, when the value is below the predetermined threshold, considers that the user is using the electronic device.

As presented in figure 3, in embodiments, the method of the figure 2 may also comprise, when detecting that the user is using the hand-held device 102, a step 801 of adapting, toward an optimal value, a value of a parameter of a function of an element of the hand-held device 102.

The optimal value may be a value of the parameter of the function of the element of the hand-held device 102 that make using the hand-held device 102 the most comfortable for the user. For example the hand-held device 102 may be configured to display the elements of the screen of the hand-held device 102 so that the user is holding the hand-held device 102 at the Harmon distance. The Harmon distance is the most comfortable distance for close work. The Harmon distance depends on the distance between the tip of the elbow and the middle of the index finger.

The more a confidence of the detection, that the user is using the hand-held device 102, is high, the more the value of the parameter of the function of the element of the hand-held device 102 is adapted toward the optimal value.

For example, if the test of the previous section is used, the adaptation of the value toward the optimal value is increased when the predetermined threshold is decreased.

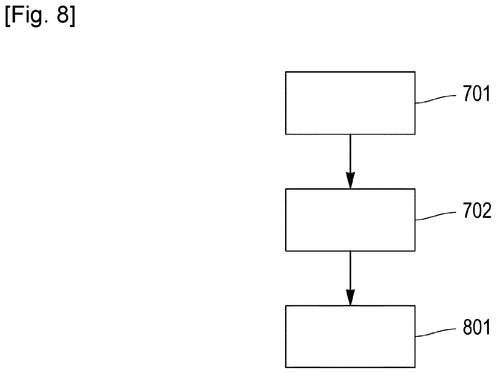

In embodiments the method of the figure 7 or the figure 8 may also comprises, when detecting that the user is using the hand-held device 102, a step of adapting, toward an optimal value, a value of a parameter of a function of an element of the head-worn device 103.

**As** previously the optimal value may be a value of the parameter of the function of the element of the head-worn device 103 that make using the hand-held device 102 the most comfortable for the user.

The element of the head-worn device 103 may be an optical device or an active optical device. When the element is an active optical device, the function may be chosen among the functionalities described above.

The more a confidence of the detection, that the user is using the hand-held device102 , is high, the more the value of the parameter of the function of the element of the head-worn device 103 is adapted toward the optimal value of the parameter of the function of the element of the head-worn device 103.

For example, if the test of the previous section is used, the adaptation of the value toward the optimal value is increased when the predetermined threshold is decreased.

The optimal value of the function of the element of the head-worn device 103 or the optimal value of the function of the element of the head-worn device 103 may depend on values of environmental parameters and/or values of physiological parameters of the user.

The environmental parameters may comprise:

- an indication of an activation of the Wi-Fi,
- an amount of an ambient light,
- a distance between eyes of the user and the hand-held device 102,
- a type of the hand-held device 102
- a type of the usage of the hand-held device 102 by the user (for example reading, scrolling pictures or articles or watching movies) and/or
- indoor or outdoor conditions

The physiological parameters of the user may comprise:

- an age of the user
- a refraction of the user and/or
- parameters representing a visual performance of the user, for example a visual acuity of the user and a dynamic visual acuity of the user.

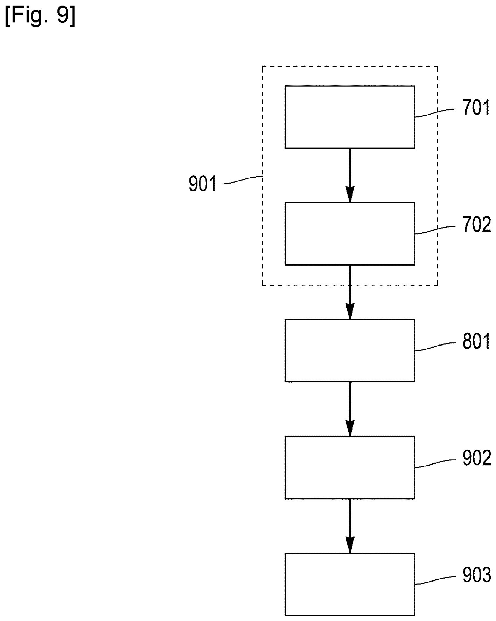

**The** figure 9 represents another embodiment of the method of the figure 7. As presented in figure 9 the step 701 of determining the relative motion and the step 702 of detecting, based on the relative motion, the use of the hand-held device 102 may form a first test 901. As presented in figure 9 the method of this disclosure may also comprise a step 902 of detecting, using a second test, the use of the hand-held device 102 by the user. As presented in the figure 9, the method of this disclosure may also comprise, when detecting, using the second test 902, that the user is using the hand-held device 102, a step 903 of realising a second adaptation, toward the optimal value, of the value of the parameter of the function of the element of the hand-held device 102.

The first adaptation may depend on a value of a parameter of the first test 901 and/or the second adaptation may depend on a value of a parameter of the second test 902.

The first test 901 and the second test 902 may be realized by an increasing order of a confidence level of the first test 901 and a confidence level of the second test 902.

This classification generally implies that the tests are ordered de facto by increasing order of complexity.

In embodiments, when the confidence level of the first test 901 is higher than the confidence level of the second test 902, one may adapt more, toward the optimal value, the value of the function of the element of the hand-held device 102, during the first adaptation than during the second adaptation. When the confidence level of the first test 901 is lower than the confidence level of the second test 902, one may adapt more, toward the optimal value, the value of the function of the element of the hand-held device 102, during the second adaptation than during the first adaptation.

In embodiments the value of the function of the element of the head-worn device 103 is adapted, during the second adaptation, in addition or instead of the value of the function of the element of the hand-held device 102.

In embodiments, when the confidence level of the first test 901 is higher than the confidence level of the second test 902, one may adapt more, toward the optimal value, the value of the function of the element of the head-worn device 103, during the first adaptation than during the second adaptation. When the confidence level of the first test 901 is lower than the confidence level of the second test 902, one may adapt more, toward the optimal value, the value of the function of the element of the head-worn device 103, during the second adaptation than during the first adaptation.

The second test 902 may comprise a detection of the gaze axis of the user, when the detected gaze axis is crossing the hand-held device 102, the use of the hand-held device 102 is detected.

The detection of the gaze axis of the user may be realized using the eye tracking module of the hand-held device 102 or using the eye tracking module of the head-worn device 103.

**The** second test 902 may comprise a determination of a distance between the head-worn device 103 and the hand-held device 102. When the distance is below a distance threshold, the use of the hand-held device 102 is detected.

The second test 902 may comprise a detection of a reception by the hand-held device 102 of a notification, when the hand-held device 102 receives the notification, the use of the hand-held device is detected.

**The** second test 902 may comprise determining whether a screen of the hand-held device 102 is turned on, when the screen of the hand-held device 102 is determined to be turned on, the use of the hand-held device is detected.

**The** second test 902 may comprise obtaining signals from sensors of the hand-held device 102 and the head-worn device 103 and inputting these signals in a machine learning module to determine whether or not the user is using the hand-held device 102. The machine learning module may have been previously trained with model signals associating respectively with an indication of whether or not the user is using the hand-held device 102.

The second test 902 may comprise obtaining signals form the IMU of the hand-held device 102 or the IMU of the head-worn device 103, determining an angle of a head of the user, for example using the camera of the head-worn device 103 or the hand-held device 102 and a distance between the hand-held device 102 and the head-worn device 103 or the face of the user. Based on the signals, the angle and the distance one may detect the use of the hand-held device 102 by the user.

In embodiments a third test, a fourth test and so on, associated with a third adaptation and a fourth adaptation may be realized.

### *Description of use cases of the method and system of the disclosure*

In a use case the head-worn device 102 may be smart eyeglasses having at least one sensor to measure the motion of the head of the user, active lenses for example electrochromic optical lenses or active lenses on which the power of the lenses can be adapted, a camera and an inertial module unit. The hand-held device intended to be used by the user may be a smartphone. This smartphone may comprise a camera and an inertial module unit.

In a first test the images obtained by the camera of the smartphone may be used to detect the use of the smartphone by the user.

In a second test the images obtained by the camera of the smart eyeglasses may be used to detect the use of the smartphone by the user. To realize the detection an estimation of the field of view of the user may be realized based on these images and a determination whether or not the smartphone is within this field of view.

In a third test a motion of the head of the user may be detected using the IMU of the smartphone and/or the IMU of the smart eyeglasses. For example, signals coming from the IMU of the smartphone and/or the IMU of the smart eyeglasses may be inputted in a machine learning model.

In a fourth test a reception of a notification by the smartphone is detected and in such case one may consider that the user is using the smartphone.

Once, based on the above presented four tests, the use of the smartphone is detected one may obtain values of environmental parameters (an indication of an activation of the Wi-Fi, an indication of whether the user is indoor or outdoor, a localization of the user, a distance between eyes of the user and smartphone, a type of the smartphone, a type of the usage of the smartphone by the user).

Based on the values of these environmental parameters and possibly of the values of the physiological parameters, for example and advantageously the refraction of the user, once the use of the smartphone is detected, one may adapt a value of the function of the active lens.

## Claims

1. System (101) comprising a head-worn device (103) and a hand-held device (102), the system (101) being configured to detect a use of the hand-held device (102) by a user wearing the head-worn device (103),
   the system (101) being also configured:

   - to determine a relative motion of one among the head-worn device (103) and the hand-held device (102) with respect to another among the head-worn device (103) and the hand-held device (102) and,
   - to detect, based on the relative motion, the use of the hand-held device (102) by the user.

2. The system (101) according to the claim 1,

   the head-worn device (103) comprising a motion determination module and/or
   the hand-held device (102) comprising a motion determination module.

3. The system (101) according to the claim 1 or 2,
   the system (101) being also configured:

   - to determine a value of a parameter of the relative motion,
   - to determine when the user is using the hand-held device (102) by comparing the value with a predetermined threshold.

4. The system (101) according to any one of the claims 1 to 3,
   the system (101) being also configured:

   - when detecting that the user is using the hand-held device (102), to adapt, toward an optimal value, a value of a parameter of a function of an element of the head-worn device (103).

5. The system (101) according to the claim 4, the optimal value depending on values of environmental parameters and/or values of physiological parameters of the user.

6. The system (101) according to the claim 4 or 5,

the determination of the relative motion and the detection, based on the relative motion, of the use of the hand-held device (102) by the user, are together a first test (901), the adaptation is a first adaptation, the system (101) being configured:

- to detect, using a second test (902), the use of the hand-held device (102) by the user,
- when detecting, using the second test (902), that the user is using the hand-held device (102), to realise a second adaptation, toward the optimal value, of the value of the parameter of the function of the element of the head-worn device (103).

7. The system (101) according to the claim 6,

the first adaptation depending on a value of a parameter of the first test (901) and/or the second adaptation depending on a value of a parameter of the second test (902).

8. The system (101) according to the claim 6 or 7, the system being configured to realize the first test (901) and the second test (902) by an increasing order of a confidence level of the first test (901) and a confidence level of the second test (902).

9. The system (101) according to the claim 8, the system (101) being configured:

- when the confidence level of the first test (901) is higher than the confidence level of the second test (902), to adapt more, toward the optimal value, the value of the function of the element of the head-worn device (103), during the first adaptation than during the second adaptation and/or
- when the confidence level of the first test (901) is lower than the confidence level of the second test (902), to adapt more, toward the optimal value, the value of the function of the element of the head-worn device (103), during the second adaptation than during the first adaptation.

10. The system (101) according to anyone of the claims 6 to 9,

the second test (902) comprising a detection of a gaze axis of the user, when the detected gaze axis is crossing the hand-held device, the use of the hand-held device (102) is detected.

11. The system (101) according to anyone of the claims 6 to 9,

the second test (902) comprising a detection of a reception by the hand-held device (102) of a notification, when the hand-held device (102) receives the notification, the use of the hand-held device (102) is detected and/or the second test (902) comprising determining whether a screen of the hand-held device (102) is turned on, when the screen of the hand-held device (102) is determined to be turned on, the use of the hand-held device (102) is detected.

12. The system (101) according to any one of the claims 4 to 11,

the optimal value being a first optimal value, the system (101) being also configured:

- when detecting that the user is using the hand-held device (102), to adapt, toward a second optimal value, a value of a parameter of a function of an element of the hand-held device (102).

13. The system (101) according to any one of the claims 1 to 12, the head-worn device (103) being eyeglasses or a clip configured to be attachable to eyeglasses.

14. The system (101) according to any one of the claims 1 to 13, the hand-held device (102) being a smartphone.

15. Computer-implemented method for detecting a use of a hand-held device by a user wearing a head-worn device, the computer-implemented method comprising:

- determining (701) a relative motion of one among the head-worn device and the hand-held device with respect to another among the head-worn device and the hand-held device,
- detecting (702), based on the relative motion, the use of the hand-held device by the user.

[Fig. 1]

[Fig. 2]

[Fig. 3]

[Fig. 4]

[Fig. 5]

501

[Fig. 6]

D'

P'

[Fig. 7]

701

702

[Fig. 8]

[Fig. 9]

## EUROPEAN SEARCH REPORT

Application Number

EP 23 30 6802

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2017/060266 A1 (GAO YI [CN] ET AL)<br>2 March 2017 (2017-03-02)<br>* paragraph [0027] - paragraph [0086];<br>figures 1-9 *<br>* paragraphs [0119], [0127] *<br>----- | 1-3,<br>13-15<br>4-12 | INV.<br>G06F3/01<br>G06F1/16<br><br>ADD.<br>G02B27/01 |
| X | US 2017/163578 A1 (DELUCA LISA SEACAT [US] ET AL) 8 June 2017 (2017-06-08)<br>* paragraph [0035] - paragraph [0081] *<br>* paragraph [0121] - paragraph [0133] *<br>----- | 1-15 | |
| A | HO JIMMY R02944004@NTU EDU TW ET AL:<br>"EyeProtector Encouraging a Healthy<br>Viewing Distance when Using Smartphones",<br>HOT TOPICS IN MIDDLEBOXES AND NETWORK<br>FUNCTION VIRTUALIZATION, ACM, 2 PENN<br>PLAZA, SUITE 701 NEW YORK NY 10121-0701<br>USA,<br>24 August 2015 (2015-08-24), pages 77-85,<br>XP058513576,<br>DOI: 10.1145/2785830.2785836<br>ISBN: 978-1-4503-3540-9<br>* abstract *<br>* sections Introduction, Application<br>design: Algorithm, User Studies: Study 2;<br>page 77 - page 81 *<br>----- | 1-15 | |
| | -/-- | | TECHNICAL FIELDS<br>SEARCHED (IPC)<br><br>G06F<br>G02B |

The present search report has been drawn up for all claims

| Place of search | Date of completion of the search | Examiner |
|---|---|---|
| Munich | 16 February 2024 | Tonet, Oliver |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 23 30 6802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEE JI YEON ALL4ME8911@GMAIL COM ET AL: "EYE DEAR Smartphone Text Resizing Interaction for the Eye Health of the Presbyopia Population", PROCEEDINGS OF THE 35TH IEEE/ACM INTERNATIONAL CONFERENCE ON AUTOMATED SOFTWARE ENGINEERING, ACM, 2 PENN PLAZA, SUITE 701NEW YORKNY10121-0701USA, 20 October 2017 (2017-10-20), pages 161-163, XP058936399, DOI: 10.1145/3131785.3131830 ISBN: 978-1-4503-7001-1 * abstract * * sections Introduction: Application Design, Discussion; page 161 – page 162; figure 2 * ----- | 1-15 | |

| | | TECHNICAL FIELDS SEARCHED (IPC) |
|---|---|---|

The present search report has been drawn up for all claims

| Place of search | Date of completion of the search | Examiner |
|---|---|---|
| Munich | 16 February 2024 | Tonet, Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    ........................................................................

& : member of the same patent family, corresponding
document

EPO FORM 1503 03.82 (P04C01)

EP 4 542 342 A1

## ANNEX TO THE EUROPEAN SEARCH REPORT
## ON EUROPEAN PATENT APPLICATION NO.

EP 23 30 6802

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2024

| Patent document cited in search report | Publication date | Patent family member(s) | | Publication date |
|---|---|---|---|---|
| US 2017060266 A1 | 02-03-2017 | CN | 105183156 A | 23-12-2015 |
| | | EP | 3136201 A1 | 01-03-2017 |
| | | JP | 6310556 B2 | 11-04-2018 |
| | | JP | 2017533480 A | 09-11-2017 |
| | | KR | 20170037869 A | 05-04-2017 |
| | | MX | 369243 B | 30-10-2019 |
| | | US | 2017060266 A1 | 02-03-2017 |
| | | WO | 2017036035 A1 | 09-03-2017 |
| US 2017163578 A1 | 08-06-2017 | NONE | | |

EPO FORM P0459

For more details about this annex : see Official Journal of the European Patent Office, No. 12/82